# EUROPEAN PATENT APPLICATION

(11) **EP 1 698 588 A1**
(43) Date of publication of application: **06.09.2006**
(21) Application number: 05004851.1
(22) Date of filing: 04.03.2005
(51) Int. Cl.: C01B 3/02, C01B 3/48, C01B 3/58

(54) **Ammonia synthesis process**

(71) Applicant: Ammonia Casale S.A., 6900 Lugano-Besso (CH)
(72) Inventor: Filippi, Ermanno, 6976 Castagnola (CH)
(74) Representative: Zardi, Marco

(57) **Abstract**

In an industrial scale ammonia synthesis process (10, 110), in which the hydrogen necessary for such synthesis is obtained by subjecting natural gas (5) to partial oxidation (16), with an oxygen-rich gas (6) and in the presence of steam (2), obtaining a gaseous mixture (7) that comprises hydrogen, carbon dioxide, carbon monoxide and water, said gaseous mixture (7) is firstly subjected to catalytic conversion (18) to convert part of the carbon monoxide into carbon dioxide, then to decarbonation (20) to remove the carbon dioxide (20a) and finally to purification (22) to reduce the unconverted carbon monoxide concentration.

## Description

### Field of application

The present invention refers, in its most general aspect, to an industrial scale ammonia synthesis process, based upon a partial oxidation of a natural gas, preferably methane, with an oxygen-rich gas and in the presence of steam, obtaining a gaseous mixture that comprises hydrogen, carbon dioxide and carbon monoxide, recovery of hydrogen from said mixture and use thereof in said ammonia synthesis.

In particular, the invention refers to an ammonia synthesis process where for the recovery of hydrogen from the gaseous mixture, this is firstly subjected to catalytic conversion (shift) to convert part of the carbon monoxide into carbon dioxide, then to decarbonation to remove the carbon dioxide and finally to purification to reduce the unconverted carbon monoxide concentration.

The invention also refers to an ammonia synthesis plant that carries out the aforementioned process.

### Prior art

Large scale ammonia synthesis processes (in other words for productions for example of 3000 t per day) from natural gas, for example and preferably methane, are known, in which the hydrogen necessary for said synthesis is recovered from the gaseous mixture obtained from a partial oxidation of the selected natural gas, carried out with an oxygen-rich gas, said mixture also containing carbon monoxide and carbon dioxide.

It is known that for such recovery the aforementioned processes provide
a catalytic conversion (shift) of part of carbon monoxide into carbon dioxide;
a decarbonation to remove, to the greatest possible degree, the carbon dioxide (through absorption of the carbon dioxide in a suitable physical solvent);
a purification through washing with liquid nitrogen, to reduce the concentration, to the greatest possible degree, of unconverted carbon monoxide.

The decarbonation and purification steps are therefore intended to remove, to the greatest possible degree, carbon dioxide and carbon monoxide respectively, to a concentration of a few parts per million in volume (for example, a value that is sought after is a value of less than 10 p.p.m.v. of carbon monoxide).

Although advantageous from different points of view, the ammonia synthesis processes schematically described above nevertheless have recognized drawbacks.

Amongst the drawbacks, one only has to recall the fact that the washing operation with liquid nitrogen must take place at very low temperatures and consequently requires the use of special materials and suitable heat insulation, which, although known, are nevertheless fairly expensive and require a whole series of special precautions.

### Summary of the invention

The technical problem underlying the present invention is that of devising and providing an ammonia synthesis process of the type considered above that is easy to carry out and does not require high energy consumption and operating costs and in which the recovery of hydrogen from the aforementioned gaseous mixture is carried out so as to overcome the limitations and/or drawbacks quoted with reference to the prior art.

This problem is solved, according to the present invention, by an ammonia synthesis process of the aforementioned type and characterized in that said catalytic conversion is such that the concentration of said unconverted carbon monoxide is less than 1% and that said purification comprises a methanation reaction to transform said unconverted carbon monoxide into methane.

Advantageously, said catalytic conversion is carried out at a low temperature and isothermally.

Alternatively, again advantageously, said catalytic conversion is carried out firstly, adiabatically, at a high temperature and then, again adiabatically, at a low temperature.

Further characteristics and advantages of the ammonia synthesis process according to the present invention shall become clear from the following description of a preferred embodiment thereof, made for indicating and not limiting purposes, with reference to the attached drawings.

### Brief description of the drawings

Figure 1 represents a block diagram of a first embodiment of the ammonia synthesis process according to the invention.
Figure 2 represents a block diagram of a second embodiment of the ammonia synthesis process according to the invention.

### Detailed description of a preferred embodiment

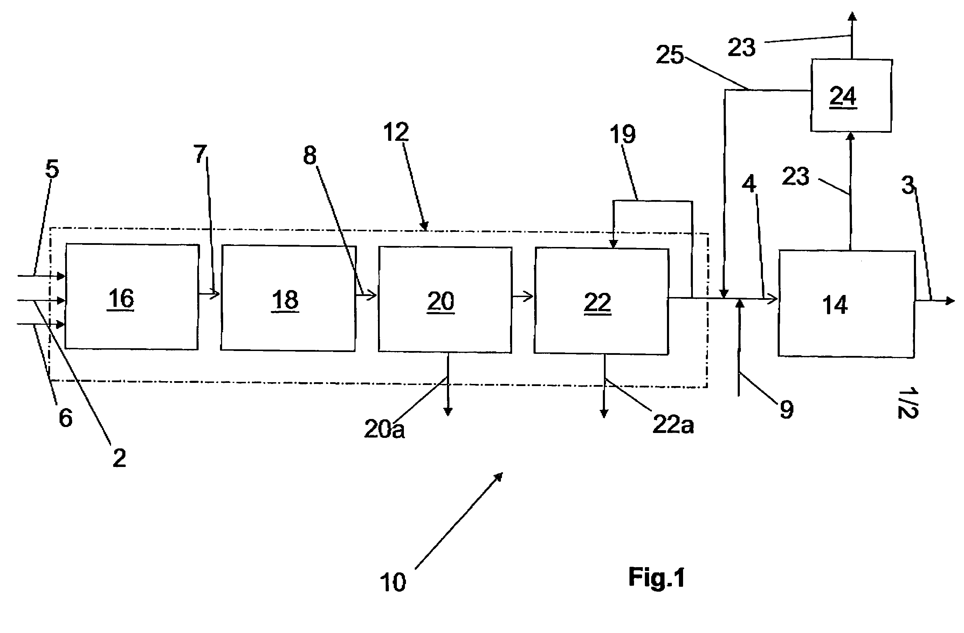

With reference to figure 1, a first embodiment of an ammonia synthesis process according to the invention is schematically shown, globally indicated with 10. The ammonia 3 is produced from a gaseous mixture 4 essentially comprising nitrogen and hydrogen, in turn obtained from a natural gas 5, preferably methane.

The process comprises a first production stage 12 of said gaseous mixture 4 essentially comprising nitrogen and hydrogen and a second synthesis stage 14 of said ammonia 3.

The first stage 12 of the process comprises a per se known partial oxidation step 16 of said natural gas 5 with an oxygen-rich gas 6 in the presence of steam 2, a shift step 18 for the catalytic conversion of carbon monoxide into carbon dioxide, a decarbonation step 20 to remove the carbon dioxide 20a and a purification step 22 to reduce the unconverted carbon monoxide concentration.

In particular, in accordance with an advantageous aspect of the present invention, such a purification step 22 comprises a methanation reaction to transform the unconverted carbon monoxide into methane 22a.

By the term "methanation reaction" it is understood a per se known hydrogenation reaction of carbon monoxide, obtaining methane. It should be noted that the hydrogen necessary for the hydrogenation reaction is preferably and advantageously recovered from the gaseous mixture itself, drawing a part 19 of such a gaseous mixture off from downstream of the aforementioned purification step 22, to which it is recirculated.

Furthermore, in accordance with another advantageous aspect of the present invention, the shift step 18 for the catalytic conversion is such that the unconverted carbon monoxide concentration is less than 1%.

Said catalytic conversion 18 is carried out at a low temperature and isothermally, a per se conventional operation that for this reason is not described in detail.

The natural gas 5, suitably mixed with steam 2, is subjected, in the partial oxidation step 16 of the first stage 12 of the process, to a partial oxidation reaction with an oxygen-rich gas 6, obtaining a gaseous mixture 7 comprising hydrogen, carbon dioxide, carbon monoxide and water.

As an example, when the partial oxidation step 16 is carried out in an autothermal reformer, it is good to operate at a pressure of between 40 and 150 bar, preferably between 40 and 100 bar, and with a temperature at the output of the reformer of between 900 and 1300 °C, preferably between 900 and 1200 °C.

Said oxygen-rich gas 6 has at least 50%, preferably at least 70%, even more preferably at least 90% oxygen; at the extreme, pure oxygen can also be used. As an example, air enriched in oxygen can be used: in this case, nitrogen is also present in the gaseous mixture 7. Alternatively, an oxygen-rich gas without nitrogen can also be used, the nitrogen necessary for the ammonia synthesis being added thereafter, as described below in relation to the reference numeral 9.

For the recovery of hydrogen from said gaseous mixture 7, it is firstly subjected to a shift step 18, with low temperature and isothermal catalytic conversion, to convert part of the carbon monoxide into carbon dioxide obtaining a gaseous mixture 8 comprising hydrogen, carbon dioxide, unconverted carbon monoxide and water. It should be noted how the gaseous mixture in output from the shift step 1B is advantageously poor in carbon monoxide: it has been found that carbon monoxide concentrations of around 0.2% are, for example, obtained.

The gaseous mixture 8 is subjected to a per se known decarbonation step 20, to remove, to the greatest possible degree, for example less than 1000 ppm, the carbon dioxide 20a and to a purification step 22, comprising said methanation reaction, to reduce the amount of carbon monoxide to concentrations compatible with the ammonia synthesis catalyst provided in the second stage 14 of the process, for example to concentrations of less than 10 ppmv.

After said purification step, a nitrogen feed 9 is provided to form a gaseous mixture 4, essentially comprising nitrogen and hydrogen according to an optimal stechiometric ratio for the ammonia synthesis catalyst. In the case in which air enriched in oxygen is used, the gaseous mixture 7, as stated, already contains nitrogen for which reason the nitrogen feed 9 is, basically, an integration that has the purpose of reaching said optimal stechiometric ratio. Although not always necessary, such a nitrogen feed 9 is generally preferable since it allows the conversion yield in the second synthesis stage 14 of ammonia 3 to be increased, as shall be described hereafter.

In the gaseous mixture 4 there is also, as inert gas, the methane produced by the methanation reaction of the purification step 22.

The gaseous mixture 4 is then treated in the second stage 14 of the process, i.e. the synthesis stage of said ammonia 3, in which the ammonia 3 is produced by catalytic conversion of the reactants hydrogen and nitrogen that are present in the gaseous mixture 4. The methane contained in the gaseous mixture 4 behaves as the inert gas for said synthesis of the ammonia 3 and is then bled from the second stage 14 in a per se known way.

In particular, according to a preferred embodiment of the present invention, the bleeding gas flow 23 that comes out from said second synthesis stage 14 of the ammonia and that comprises, in addition to methane, also traces of hydrogen and possibly also other inert gases such as argon, is advantageously subjected to a per se known hydrogen separation step 24, for the recovery of the hydrogen from the bleeding gas. The hydrogen 25 thus recovered is then advantageously recirculated upstream of the second stage 14 where it mixes with the gaseous mixture 4.

The invention also refers to an ammonia synthesis plant that carries out the aforementioned process. The block diagram of figure 1, as well as indicating the operating steps of the process that have just been described, also schematically illustrates the arrangement of the apparatuses that carry out the aforementioned process: in this figure, the apparatuses that carry out the different operating steps of the process are indicated with the same reference numeral as the corresponding step.

The plant, globally indicated with 10, comprises a first section 12 for producing the gaseous mixture 4 essentially comprising nitrogen and hydrogen and a second synthesis section 14 of the ammonia 3.

The first section 12 of the plant 10 mainly comprises a per se known partial oxidation apparatus 16 of said natural gas 5 with an oxygen-rich gas 6, a shift converter 18 for the catalytic conversion of carbon monoxide into carbon dioxide, a decarbonation apparatus 20 and a purification apparatus 22.

In particular, in accordance with an advantageous aspect of the present invention, such a purification apparatus 22 comprises a methanation apparatus or methanator to carry out the aforementioned hydrogenation reaction of carbon monoxide obtaining methane.

Furthermore, in accordance with another advantageous aspect of the present invention, the shift converter 18 is an isothermal low or medium temperature catalytic converter. For example, such a shift converter comprises a tube bundle heat exchanger (not represented) in which shell side, i.e. outside the tubes, the gaseous mixture is made to flow, whereas tube side, i.e. inside the tubes, an operating heat exchange fluid flows to remove the reaction heat, the tubes being immersed in a catalytic mass.

Preferably, the plant 10 also comprises a per se known hydrogen separation apparatus 24 for the recovery of the hydrogen contained in the bleeding gas that comes out from the ammonia synthesis section 14.

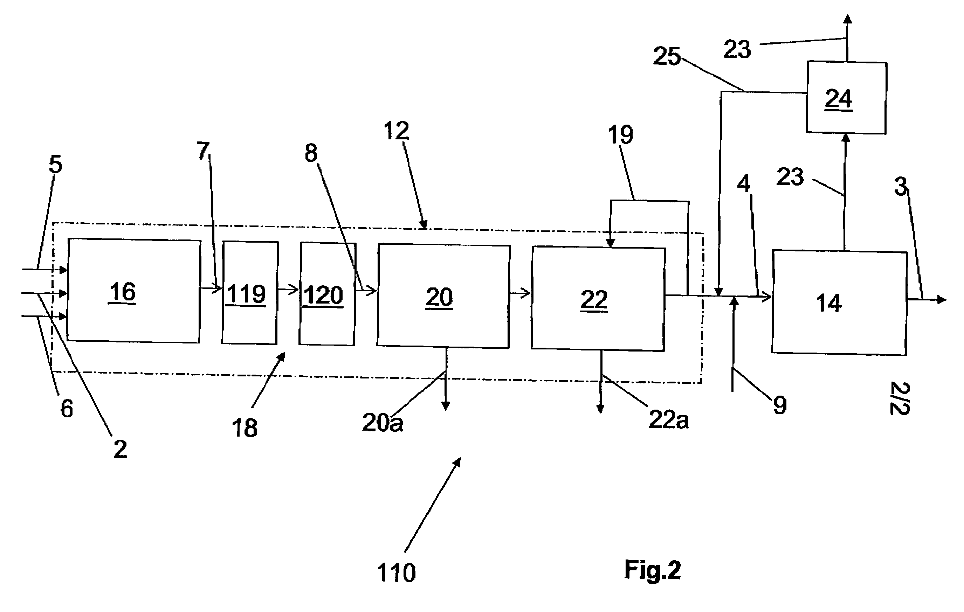

With reference to figure 2, a second embodiment of the process according to the invention is schematically shown, which is globally indicated with 110; in this figure, the elements operatively analogous to those of the first embodiment 10 of the process (figure 1) are indicated with the same reference numeral and, for the sake of brevity, the detailed description of them shall not be repeated.

In this embodiment 110, the catalytic conversion (shift) of the carbon monoxide into carbon dioxide is carried out firstly, adiabatically (i.e. without the addition of heat), at a high temperature 119 and then, again adiabatically, at a low temperature 120. Such operating steps 119 and 120 are per se conventional and for this reason are not described in detail.

It should be noted how, also in this case, the gaseous mixture in output from the shift step 18 is advantageously poor in carbon monoxide: it has been found that carbon monoxide concentrations of around 0.2% are, for example, obtained.

The invention also refers to an ammonia synthesis plant 110 that carries out the aforementioned process in accordance with this second embodiment of the invention. The block diagram of figure 2, as well as indicating the operating steps of the process that have just been described, also schematically illustrates the arrangement of the apparatuses that carry out the aforementioned process: in this figure, the apparatuses that carry out the different operating steps of the process are indicated with the same reference numeral as the corresponding step.

In particular, the plant 110 differs from the plant 10 in that, in the plant 110, a shift conversion section 18 is provided, which comprises an adiabatic high temperature shift converter 119 and a low temperature shift converter 120, again of the adiabatic type.

With regard to the process of the invention, it should finally be observed that, for large scale productions, the partial oxidation step 16 is preferably carried out catalytically, i.e. in apparatuses of autothermal reforming (autothermal reformer), even if the use of non-catalytic partial oxidation apparatuses, which require, on the one hand, higher oxygen consumption and therefore higher energy consumption, but which are constructively simpler, is not excluded. Above all, where the energy cost is low, the use of non-catalytic apparatuses may therefore be advantageous.

From the previous description it can clearly be seen that the ammonia synthesis process according to the invention solves the technical problem and achieves numerous advantages the first of which lies in the fact that the use of the whole series of special materials necessary for the correct treatment of the liquid nitrogen used in the prior art is avoided.

Another major advantage of the invention is that the gas mixture obtained at the end of the purification step is practically pure hydrogen that, in parallel with the ammonia synthesis, can be used directly.

Another advantage of the invention is given by the fact that, by feeding nitrogen downstream of the purification step, the concentration of methane (inert) in the gaseous mixture in input to the ammonia synthesis is suitably reduced and is therefore less than processes of the prior art where all of the nitrogen is fed to the partial oxidation step. By reducing the concentration of inert gases, an increase in the conversion yield is advantageously obtained in the ammonia synthesis stage with respect to the prior art.

Of course, a man skilled in the art can bring numerous modifications and variants to the ammonia synthesis process described above, in order to satisfy specific and contingent requirements, all of which are covered by the scope of protection of the present invention, as defined by the following claims.

## Claims

1. Industrial scale ammonia (3) synthesis process (10, 110), based upon a partial oxidation (16) of a natural gas (5), preferably methane, with an oxygen-rich gas (6) and in the presence of steam (2), obtaining a gaseous mixture (7) that comprises hydrogen, carbon dioxide, carbon monoxide and water, recovery of hydrogen from said mixture (7) and use thereof in said ammonia (3) synthesis, where for the recovery of hydrogen from the gaseous mixture (7), this is firstly subjected to catalytic conversion (18) to convert part of the carbon monoxide into carbon dioxide, then to decarbonation (20) to remove the carbon dioxide (20a) and finally to purification (22) to reduce the unconverted carbon monoxide concentration, **characterized in that** said catalytic conversion (18) is such that the concentration of said unconverted carbon monoxide (22a) is less than 1% and **in that** said purification (22) comprises a methanation reaction to transform said unconverted carbon monoxide into methane (22a).

2. Ammonia (3) synthesis process (10) according to claim 1, **characterized in that** said catalytic conversion (18) is carried out at a low temperature and isothermally.

3. Ammonia (3) synthesis process (110) according to claim 1, **characterized in that** said catalytic conversion (18) is carried out firstly, adiabatically, at a high temperature (119) and then, again adiabatically, at a low temperature (120).

4. Ammonia (3) synthesis process (10, 110) according to claim 1, **characterized in that**, after said purification (22), a nitrogen feed (9) is provided to form a mixture (4) essentially comprising nitrogen and hydrogen that is treated in a synthesis stage (14) of said ammonia (3).

5. Ammonia (3) synthesis process (10, 110) according to claim 1, **characterized in that** said partial oxidation (16) is of the catalytic type, i.e. it is a autothermal reforming.

6. Ammonia (3) synthesis process (10, 110) according to claim 1, **characterized in that**, after said purification (22), the gaseous mixture (4) thus obtained is treated in a synthesis stage (14) of said ammonia (3), obtaining a bleeding gas (23) comprising methane and traces of hydrogen, said bleeding gas (23) being subjected to a separation step of the hydrogen for the recovery of the hydrogen from said bleeding gas (23) and said recovered hydrogen (25) being recirculated in said gaseous mixture (4) upstream of said ammonia synthesis stage (14).

7. Industrial scale ammonia (3) synthesis plant (10, 110), of the type comprising a partial oxidation apparatus (16), in which natural gas (5) is partially oxidized with an oxygen-rich gas (6), in the presence of steam (2), obtaining a gaseous mixture (7) that comprises hydrogen, carbon dioxide, carbon monoxide and water, a shift conversion section (18), in which part of the carbon monoxide is catalytically converted into carbon dioxide, a decarbonation apparatus (20) to remove the carbon dioxide (20a) and a purification apparatus (22) to reduce the unconverted carbon monoxide concentration, **characterized in that** said shift conversion section (18) is such that the concentration of said unconverted carbon monoxide (22a) is less than 1% and **in that** said purification apparatus (22) comprises a methanator to transform said unconverted carbon monoxide into methane (22a).

8. Plant (10) according to claim 6, **characterized in that** said shift conversion section (18) comprises an isothermal low temperature shift converter.

9. Plant (110) according to claim 6, **characterized in that** said shift conversion section (18) comprises an adiabatic high temperature shift converter (119) and an adiabatic low temperature shift converter (120) .

10. Plant (10, 110) according to claim 1, **characterized in that** it comprises a synthesis section (14) of said ammonia (3) and a hydrogen separation apparatus (24), for the recovery of the hydrogen present in a bleeding gas, comprising methane and traces of hydrogen, obtained in said ammonia synthesis section (14).
